# EUROPÄISCHE PATENTSCHRIFT

(11) **EP 2 425 959 B1**
(45) Veröffentlichungstag und Bekanntmachung des Hinweises auf die Patenterteilung: **31.07.2013**
(21) Anmeldenummer: 10175453.9
(22) Anmeldetag: 06.09.2010
(51) Int. Cl.: B29C 49/64, B29C 49/68, B29C 49/78

(54) **Vorrichtung sowie Verfahren zum Erwärmen von Vorformlingen**
Device and method for heating preforms
Dispositif et procédé de chauffage de préformes

(43) Veröffentlichungstag der Anmeldung: 07.03.2012
(73) Patentinhaber: Krones AG, 93073 Neutraubling (DE)
(72) Erfinder: Lappe, Ulrich, 93059 Regensburg (DE)
(74) Vertreter: Benninger, Johannes

(56) Entgegenhaltungen:
- WO-A1-02/32652
- WO-A1-03/055665
- WO-A2-97/10936
- DE-A1-102008 039 375
- JP-A- 5 269 828

## Beschreibung

Die vorliegende Erfindung betrifft eine Vorrichtung zum Erwärmen von Vorformlingen mit den Merkmalen des unabhängigen Anspruchs 1. Die Vorrichtung weist eine Erwärmungsgasse auf, wobei die Erwärmungsgasse mindestens einen ersten Strahler umfasst, der elektromagnetische Strahlung in einem ersten Wellenlängenbereich emittiert.

Ferner betrifft die vorliegende Erfindung ein Verfahren zum Erwärmen von Vorformlingen mit den Merkmalen des unabhängigen Verfahrensanspruchs 12. Die Erwärmung von Vorformlingen in einer Erwärmungsgasse erfolgt derart, dass die Vorformlinge um ihre Längsachse rotierend durch die Erwärmungsgasse bewegt werden.

### Stand der Technik

Die Erfindung betrifft das Erwärmen von Vorformlingen für weiter verarbeitende Maschinen, insbesondere in Streckblasvorrichtungen. Dies erfolgt in der Regel in einem sog. Heizkanal mittels infraroter (IR) Strahlung, bspw. durch Verwendung und unter Einsatz von IR-Heizstrahlern, an denen die Vorformlinge rotierend vorbeibewegt werden, um dadurch möglichst gleichmäßig erwärmt zu werden. Um diesen Effekt noch zu verbessern und die Strahlung optimal auszunutzen, kann gegenüber und/oder hinter den IR-Heizstrahlern eine reflektierende Schicht angebracht sein.

Das Erwärmen der Vorformlinge erfolgt aufgrund der Absorption der IR-Strahlung durch das Material der Vorformlinge. Die Eindringtiefe der IR-Strahlung hängt von der Wellenlänge der eingesetzten IR-Strahlung ab. Die langwellige IR-Strahlung wird im Wesentlichen von oberflächennahen Materialschichten der Vorformlinge absorbiert. Bei einem hohen Anteil an langwelliger IR-Strahlung besteht allerdings die Gefahr, dass Material an der Oberfläche der Vorformlinge kristallisiert. Dadurch kann sich die Materialstärke der Vorformlinge an diesen Stellen verändern, was einen negativen Effekt auf den späteren Blasvorgang zur Folge haben kann, da die Vorformlinge nicht mehr homogen geblasen werden können und somit Ausschuss darstellen.

Um eine zu starke, lokal begrenzte Erwärmung zu vermeiden und den oben beschriebenen Effekt zu vermeiden, ist der Einsatz eines Oberflächen-Kühlgebläses notwendig, mit dessen Hilfe beispielsweise die Umgebungsluft ansaugt und auf die Oberfläche der Vorformlinge geblasen wird, um diese zu kühlen.

Da ein solcher Kühlungsprozess dem Vorheizen der Vorformlinge entgegen arbeitet, wird durch eine zusätzliche Oberflächenkühlung die Effizienz des Erwärmungsvorgangs der Vorformlinge negativ beeinflusst. Hinzu kommt, dass zusätzlich ein bedeutender Anteil der aufgewendeten Energie durch die Kühlung verschwendet wird. Beispiele zu solchen Konfigurationen finden sich in den Dokumenten EP 0 900 135 B1, DE 299 16 315 U1 und DE 26 10 483.

Um auf eine zusätzliche Kühlung der Vorformlinge weitgehend oder vollständig verzichten zu können, müsste bspw. das Strahlungsspektrum der IR-Strahler weitestgehend auf das Absorptionsspektrum der zu erwärmenden Vorformlinge abgestimmt werden.

Die DE 197 36 462 C2 zeigt ein Verfahren und eine Vorrichtung zum Warmformen von Thermoplasten, wobei der Rohling mit einer Strahlung definierter Intensität einer Strahlungsquelle beaufschlagt wird. Die Emissionswellenlänge liegt hierbei in einem Bereich zwischen 0,8 und 1,0 µm.

Die DE 10 2006 015 853 A1 beschreibt weiterhin ein Erwärmungsverfahren für Kunststoffe mit einer speziellen Infrarotvorrichtung, wobei Strahler mit einem selektiven Infrarot eingesetzt werden, deren Emissionsspektren mit den Absorptionsspektren der zu erwärmenden Materialien weitestgehend übereinstimmen. Das zu erwärmende Material befindet sich zwischen den beiden Strahlern, die jeweils sowohl die reflektierten als auch die transformierten Strahlen absorbieren und erneut in Emissionsstrahlung umwandeln. Dies soll eine deutliche Verkürzung der Erwärmungszeit, eine Senkung des Energieverbrauchs und eine verbesserte Produktqualität bewirken. Als nachteilig kann sich erweisen, dass die Strahler immer auf das jeweilig verwendete Material abgestimmt werden müssen, was ein Vorhalten verschiedener Strahler und deren notwendigen Austausch bedeutet.

Die DE 10 2006 045 027 B4 beschreibt eine Vorrichtung zum Aufheizen einer thermoplastischen Kunststoffbahn oder Platte, bei der Schwankungen der thermischen Randbedingungen, beispielsweise des Herstellungswerkzeuges, vermieden werden sollen, um so Formteile konstanter Qualität produzieren zu können. Dies wird durch eine bestimmte Anordnung von Temperatursensoren innerhalb und außerhalb der Thermoformmaschine erreicht.

Die EP 1 779 994 A1 beschreibt ein Verfahren zur Herstellung eines blasgeformten hohlen Produktes aus einem thermoplastischen Material. Die Produktivität soll durch eine verbesserte Heizeffizienz erhöht werden. Hierbei wird der verwendete Vorformling mit einem Heizstrahler im nahen Infrarot-Bereich mit einer maximalen Wellenlänge zwischen 900 bis 1500 nm bestrahlt, wobei in der Nähe zum Vorformling ein Wellenlängenkonvertierer angeordnet ist, der die vom Heizstrahler emittierte Strahlung absorbiert und in Strahlung einer Wellenlänge zwischen 3000 bis 5000 nm umwandelt und emittiert.

Die DE 10 2008 039 375 A1 und die WO 03/055665 A1 offenbaren eine Vorrichtung sowie ein Verfahren zum Erwärmen von Vorformlingen nach den Oberbegriffen der Ansprüche 1 und 12.

Allgemein gilt: Um die Vorformlinge richtig zu erwärmen, muss eine Reihe von Parametern beachtet werden. Wichtige Parameter hierbei sind unter anderem die Wanddicke der Vorformlinge; die Materialzusammensetzung der Vorformlinge, da diese einen direkten Einfluss auf das Absorptionsverhalten der Vorformlinge bezüglich der Infrarot-Strahlung haben sowie das Reflektionsverhalten der verwendeten reflektierenden Materialien im Heizkanal.

Insbesondere die Wanddicke der Vorformlinge ist abhängig vom herzustellenden Endprodukt und auch die Materialzusammensetzung ist zumeist nicht vollständig bekannt und kann sich gegebenenfalls abhängig von der Charge ändern, so dass eine theoretisch mögliche ideale Abstimmung des Strahlungsspektrums der verwendeten Strahler auf das Absorptionsspektrum der zu erwärmenden Vorformlinge in der Praxis nicht einfach möglich ist.

Eine vorrangige Aufgabe der Erfindung besteht darin, eine Vorrichtung zu entwickeln, mit der Vorformlinge möglichst gezielt und effektiv erwärmt werden können, wobei nach Möglichkeit auf ein zusätzliches Kühlsystem verzichtet werden soll.

Diese Aufgabe wird durch eine Vorrichtung gelöst, welche die Merkmale des Patentanspruchs 1 umfasst.

Eine weitere Aufgabe der Erfindung ist es, ein Verfahren zu liefern, mit dem Vorformlinge gezielt, effektiv und nach Möglichkeit ohne unterstützendes Kühlsystem erwärmt werden können.

Diese weitere Aufgabe der Erfindung wird durch ein Verfahren gelöst, das die Merkmale des Patentanspruchs 12 umfasst.

### Beschreibung

Die Erfindung betrifft eine Vorrichtung zum Erwärmen von Vorformlingen, um sie für weitere Verarbeitungsschritte zu temperieren. Eine solche Vorrichtung findet bspw. Verwendung, um Vorformlinge aus thermoplastischem Kunststoff auf eine gewünschte Zieltemperatur zu bringen, bevor sie in einer Streckblasmaschine in ihre endgültige Form gebracht werden. Die endgültige Form, in die die Vorformlinge durch das Streckblasen gebracht werden, kann insbesondere eine Behälterform zur Aufnahme von Flüssigkeiten wie Getränken sein.

Die Vorformlinge werden also in der Vorheiz-Vorrichtung erwärmt und anschließend im Allgemeinen mittels einer Übergabeeinheit, beispielsweise durch einen Übergabestern, an die weiterverarbeitende Maschine, insbesondere an die Blasformmaschine, übergeben. Anschließend werden die fertiggeblasenen Artikel mittels einer Entnahmeeinrichtung aus der Blasformmaschine, insbesondere zur Weiterbehandlung in einer Füll- oder Etikettiermaschine, abtransportiert. Insbesondere werden die erwärmten Vorformlinge mit der Übergabeeinheit in die Blasformmaschine überführt und aus derselben mittels einer Entnahmeeinheit entnommen und weiteren Verpackungsmaschinen o.ä. zugeführt. Bei der Übergabeeinheit und bei der Entnahmeeinheit handelt es sich vorzugsweise um einen Transferstern, einen Sägezahnstern oder andere geeignete Übergabevorrichtungen.

Die Vorrichtung umfasst eine Erwärmungsgasse, durch welche die Vorformlinge vorzugsweise um ihre Längsachse rotierend bewegt werden. In der Erwärmungsgasse sind mindestens ein erster Strahler und mindestens ein zweiter Strahler angeordnet. Der erste Strahler emittiert eine elektromagnetische Strahlung in einem ersten Wellenlängenbereich und der zweite Strahler emittiert eine elektromagnetische Strahlung in einem zweiten Wellenlängenbereich, wobei sich dieser von dem Emissionswellenlängenbereich des mindestens einen ersten Strahlers unterscheidet. Ebenso unterscheidet sich das erste Emissionsmaximum vom zweiten Emissionsmaximum.

Erfindungsgemäß werden also mindestens zwei Strahlertypen verwendet, die unterschiedliche elektromagnetische Strahlungen emittieren, um eine gleichmäßige Erwärmung der Vorformlinge zu erreichen. Kurzwellige Strahlung dringt tiefer in das Material der Wandung der Vorformlinge ein und erwärmt diese somit eher im inneren Bereich. Längerwellige Strahlung erwärmt eher die äußeren Oberflächenschichten der Wandung der Vorformlinge.

Vorzugsweise emittiert der erste Strahler elektromagnetische Strahlung im kurzwelligen Infrarot-Bereich zwischen ca. 0,78 µm bis 1,4 µm. Gemäß einer besonders bevorzugten Ausführungsform emittiert der erste Strahler elektromagnetische Strahlung bei einem Emissionsmaximum mit einer Wellenlänge von ca. 1,1 µm.

Vorzugsweise emittiert der zweite Strahler elektromagnetische Strahlung im langwelligen Infrarot-Bereich zwischen ca. 1,4 µm bis 3,0 µm. Gemäß einer besonders bevorzugten Ausführungsform emittiert der erste Strahler elektromagnetische Strahlung bei einem Emissionsmaximum mit einer Wellenlänge von ca. 1,9 µm.

Bei dem ersten und dem zweiten Strahler kann es sich also jeweils um Strahler handeln, die elektromagnetische Strahlung eines bestimmten Wellenlängenbereichs emittieren. Wenn es sich um Strahler handelt, die einen Wellenlängenbereich emittieren, so können gemäß einer bevorzugten Ausführungsform bestimmte ungewünschte Wellenlängen mit Hilfe eines Filters aus dem Wellenlängenbereich gefiltert werden. Als Filter kann bspw. eine Quarzscheibe dienen, die elektromagnetische Strahlung bestimmter Wellenlängen nicht durchlässt. Wahlweise kann auch ein polarisierender Filter zum Einsatz kommen.

Erfindungsgemäß ist der mindestens eine erste Strahler dem mindestens einen zweiten Strahler gegenüberliegend angeordnet, so dass die Vorformlinge zwischen den Strahlern vorzugsweise mittig hindurch bewegt werden. Vorzugsweise ist auf der dem Vorformling gegenüber liegenden Seite, d.h. vom Vorformling aus gesehen hinter den Strahlern, jeweils eine reflektierende Schicht angebracht, welche die Rest-Strahlung des jeweils gegenüberliegenden Strahlers reflektiert und gegebenenfalls auch die Strahlung des direkt davor angeordneten Strahlers zumindest teilweise reflektiert.

Gemäß einer weiteren bevorzugten Ausführungsform der Vorrichtung sind wenigstens zwei erste Strahler in einer ersten Reihe angeordnet und wenigstens zwei zweite Strahler in einer zweiten Reihe angeordnet, wobei die erste Reihe mit den ersten Strahlern der zweiten Reihe mit den zweiten Strahlern gegenüberliegend angeordnet ist.

Gemäß einer weiteren Ausführungsform sind mindestens zwei Strahler parallel zur Längsachse der Vorformlinge übereinander angeordnet und mindestens zwei Strahler parallel zur Bewegungsrichtung und senkrecht zur Längsrichtung der Vorformlinge hintereinander angeordnet. Beispielsweise sind also mindestens vier erste Strahler auf der einen Seite der Erwärmungsgasse und mindestens vier zweite Strahler auf der gegenüberliegenden Seite der Erwärmungsgasse angeordnet.

Gemäß einer weiteren Ausführungsform können die ersten Strahler und die zweiten Strahler auf den verschiedenen Seiten der Erwärmungsgasse auch gemischt werden.

Insbesondere können wenigstens ein erster Strahler und wenigstens ein zweiter Strahler in einer ersten Reihe angeordnet werden und wenigstens ein erster Strahler sowie wenigstens ein zweiter Strahler in einer zweiten Reihe angeordnet werden und innerhalb der Erwärmungsgasse einander gegenüberliegend angeordnet werden. Dabei kann die Anordnung so ausgestaltet sein, dass sich jeweils gleichartige Strahler direkt gegenüberliegen. Gemäß einer weiteren Ausführungsform sind die ersten und zweiten Strahler so angeordnet, dass erste Strahler jeweils zweiten Strahlern gegenüber liegen. Weiterhin sind auch versetzte Anordnungen denkbar, bei denen die Strahler nicht genau gegenüberliegend sondern versetzt zueinander angeordnet sind. Wenn in diesem Zusammenhang von ersten Strahlern und zweiten Strahler die Rede ist, so bezieht sich dies gemäß obiger Definition auf die jeweils unterschiedlichen Wellenlängenbereiche, die von den Strahlern emittiert werden und/oder auf die jeweils unterschiedlichen Emissionsmaxima der Strahler.

Gemäß einer besonders bevorzugten Ausführungsform umfasst die Vorrichtung eine Steuereinheit, mit der die Strahler jeweils einzeln ansteuerbar und in ihrer Abstrahlintensität regelbar sind. Vorzugsweise kann mittels der Steuereinheit die Intensität der einzelnen Strahler individuell eingestellt werden. Darüber hinaus ist es auch denkbar, mittels der Steuereinheit die Strahler pulsierend anzusteuern und die Frequenz der Pulsation und damit die Abstrahlintensität zu regeln.

Weiterhin ist auch denkbar, dass mit der Steuereinheit auch Strahlereinheiten bestehend aus mehreren Strahlern eines Typs oder auch gemischte Strahlereinheiten bestehend aus ersten und zweiten Strahlern steuerbar sind. Insbesondere können die parallel zur Längsachse der Vorformlinge übereinander angeordneten Strahler zu einer solchen gemeinsam steuerbaren Strahlereinheit zusammengefasst sein.

Gemäß einer weiteren Ausführungsform umfasst die Vorrichtung zum Vorwärmen von Vorformlingen eine Temperaturmesseinheit, mit der die Temperatur der Vorformlinge gemessen wird, bevor sie die Vorwärm-Vorrichtung verlassen und der weiteren Verarbeitung zugeführt werden.

Gemäß einer besonders bevorzugten Ausführungsform ist der Vorrichtung zum Vorwärmen von Vorformlingen eine Temperaturmesseinheit zum Messen der Temperatur der vorgewärmten Vorformlinge nachgeordnet. Insbesondere kann vorgesehen sein, dass die Temperaturmesseinheit der Übergabeeinheit zugeordnet ist, die die erwärmten Vorformlinge aus der Vorwärm-Vorrichtung an die weiterverarbeitende Maschine, beispielsweise die Blasformmaschine, übergibt.

Bei der Temperaturmesseinheit handelt es sich vorzugsweise um ein Pyrometer, mit dem die Temperatur des Vorformlings exakt bestimmt werden kann. Es ist aber auch die Verwendung von anderen, dem Fachmann bekannten, vergleichbaren Temperaturmessgeräten möglich.

Gemäß einer bevorzugten Ausführungsform sind die Temperaturmesseinheit und die Steuereinheit miteinander gekoppelt. Insbesondere wird aufgrund der gemessenen Temperatur der Vorformlinge am Ende der Erwärmungsgasse bzw. nach Verlassen der Erwärmungsgasse die Intensität der Strahler durch die Steuereinheit reguliert und eingestellt.

Gemäß einer weiteren Ausführungsform können die beiden unterschiedlichen Strahlertypen auch gemischt auf einer Seite der Erwärmungsgasse angeordnet sein, während auf der gegenüberliegenden Seite eine reflektierende Schicht angebracht ist, die vorzugsweise reflektierende Eigenschaften bezüglich der beiden von den jeweiligen unterschiedlichen Strahlern abgegebenen elektromagnetischen Strahlen aufweist.

Gemäß einer bevorzugten Ausführungsform weist die reflektierende Schicht eine besonders strukturierte Oberfläche auf, die ihr besondere reflektierende Eigenschaften verleiht. Vorzugsweise weist die Schicht hinter den jeweiligen Strahlern eine wellenähnliche Struktur oder ein W-förmiges Profil auf. Diese Struktur bzw. das Profil kann dazu dienen, die Strahlung des direkt davor angeordneten Strahlers in optimaler Weise zu reflektieren, wobei ein Totpunkt vermieden und somit die Effektivität des Reflexions- und Abstrahlverhaltens erhöht wird. Weiterhin kann die reflektierende Schicht dazu dienen, die Rest-Strahlung des jeweils gegenüberliegend angeordneten Strahlers zurück zum Vorformling zu reflektieren.

Darüber hinaus kann eine vorteilhafte Variante darin bestehen, zumindest einen der mindestens zwei verschiedenen Strahler als Infrarotstrahler und den wenigstens einen anderen Strahler als Mikrowellenerzeugungseinrichtung auszubilden. Ebenfalls wäre es denkbar den mindestens einen der zwei Strahler als Laser und den anderen Strahler als Mikrowellenerzeugungseinrichtung auszubilden. Alternativ wäre es möglich, den mindestens einen der zwei Strahler als Laser und den anderen als Infrarotstrahler auszubilden. Da die Mikrowellenstrahlung die Vorformlinge sehr gleichmäßig über die gesamte Wanddicke erwärmt, könnte beispielsweise die Mikrowellenerzeugungseinrichtung im Transportpfad vor dem mindestens einen zweiten Strahler angeordnet sein und eine Grunderwärmung der Vorformlinge übernehmen. Danach könnte die gewünschte exakte Temperaturprofilierung mittels Infrarotstrahlern und/oder Laserstrahlern erfolgen.

Um die Vorformlinge nur mit einem schmalen, definierten Bereich an Wellenlängen zu beaufschlagen, sind insbesondere Laserstrahlen geeignet. Dadurch könnte die Absorptionsposition in der Wanddicke der Vorformlinge exakt gesteuert werden. Bei dem Laser kann es sich insbesondere nicht um mehrere Strahlungserzeugungseinrichtungen, sondern nur um eine Erzeugungseinrichtung handeln, die die emittierte Strahlung über entsprechend angeordnete optische Mittel an die benötigten Stellen in der Heizgasse verteilt. Geeignete optische Mittel stellen beispielsweise Reflektoren, Prismen o.ä. dar. Bevorzugt befindet sich die Lasererzeugungseinrichtung am Ende der Heizgasse. Die optischen Mittel können wahlweise verstellbar angeordnet sein. Auch können ggf. die Strahler selbst variabel verstellbar angeordnet sein.

Weiterhin besteht die Möglichkeit, die Intensität des optional einsetzbaren Laserstrahlers zu regeln bzw. zu steuern. Die Regelung bzw. Steuerung kann dann anhand von Messwerten erfolgen, die beispielsweise durch ein Pyrometer ermittelt und an eine entsprechende Steuereinheit weitergegeben werden. Die Steuereinheit berechnet anhand der ermittelten Werte, ob die Vorformlinge noch weiter erwärmt werden müssen und steuert die Strahler bzw. Laser entsprechend, um am Ende der Heizstrecke die noch zu temperierenden Stellen am Vorformling nachzuerwärmen. Der Laserstahler kann auf diese Weise vorteilhaft dazu verwendet werden, die Fehler bzw. Abweichungen der Erwärmung in dem Bereich der Heizgasse auszugleichen, die mittels einer Infrarot- und/oder Mikrowellenerwärmung gemacht wurden. Insbesondere ist es vorstellbar, dass mittels Pyrometern oder anderen geeigneten Messvorrichtungen hierfür sowohl die Außentemperaturen an den Vorformlingen als auch die Temperaturen der Innenwandungen der Vorformlinge gemessen werden.

Um je nach Bedarf ein ungleichmäßiges Temperaturprofil in Umfangsrichtung auf den Vorformlingen zu erzeugen, welches beispielsweise zum Herstellen von ovalen Flaschen benötigt wird (sog. "preferential heating"), kann es darüber hinaus sinnvoll sein, eine rotierende Relativbewegung des Vorformlings zu den unterschiedlich eingebrachten Strahlungsenergieformen zeitweise und insbesondere schrittweise zu unterbinden. In diesem Zusammenhang kann es bspw. sinnvoll sein, unterschiedliche Strahler mit unterschiedlichen Leistungen zu beaufschlagen und/oder Lücken zwischen benachbarten Strahlern in der Heizgasse einzubringen, die auf die kombinierte Dreh- und Längsbewegung der Vorformlinge abgestimmt sind, so dass für die Zeit der unterschiedlichen Erwärmung in Umfangsrichtung immer die selben Umfangsbereiche der Vorformlinge an den Lücken bzw. an den Strahlern vorbeitransportiert werden. Ebenfalls wäre es denkbar, gezielt die Drehgeschwindigkeit der Vorformlinge zu variieren bzw. zeitweise das Drehen um die Längsachse zu unterbinden.

Für die genannten Methoden zum ungleichmäßigen Erwärmen "Preferential heating" eignen sich insbesondere Infrarotstrahlen und Laserstrahlen. Werden nur mindestens zwei Infrarotstrahler mit unterschiedlichem Wellenlängenbereich für dieses Verfahren eingesetzt, so sollten diese derart in einem für das "preferential heating" vorgesehenen Teilbereich der Heizgasse angeordnet sein, dass mindestens ein zu erwärmender Umfangsbereich des Vorformlings immer von beiden Wellenlängenbereichen erwärmt wird. Bevorzugt sind mindestens zwei Heizstrahler unterschiedlicher Wellenlänge oder Strahlung oder ein Vielfaches davon zur Erwärmung mindestens eines Umfangsbereichs des Vorformlings nötig. Bevorzugt befindet sich der "Preferential heating"-Bereich am Ende der Heizgasse.

Die Erfindung betrifft weiterhin ein Verfahren zur Erwärmung von Vorformlingen. Dabei werden die Vorformlinge um ihre Längsachse rotierend durch eine Erwärmungsgasse hindurch bewegt. Innerhalb der Erwärmungsgasse werden die Vorformlinge mit elektromagnetischer Strahlung in einem ersten Wellenlängenbereich bestrahlt. Gleichzeitig werden die Vorformlinge auch noch mit elektromagnetischer Strahlung in einem zweiten Wellenlängenbereich bestrahlt, wobei sich der Wellenlängenbereich der ersten elektromagnetischen Strahlung von dem Wellenlängenbereich der zweiten elektromagnetischen Strahlung unterscheidet.

Gemäß einer bevorzugten Ausführungsform wird anschließend die Temperatur des Vorformlings in einem Übergabebereich ermittelt und die Leistung von mindestens einem innerhalb der Erwärmungsgasse angeordneten Strahler eingestellt. Die Steuerung und Einstellung der Strahler geschieht hierbei vorzugsweise mittels der oben beschriebenen Steuereinheit.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht eines aus dem Stand der Technik bekannten Vorformlings;
Figur 2 zeigt schematische Ansicht einer ersten Ausführungsform einer Vorrichtung zum Erwärmen von Vorformlingen;
Figur 3 zeigt schematische Aufsicht der ersten Ausführungsform einer Vorrichtung zum Erwärmen von Vorformlingen aus Figur 2;
Figur 4 stellt die Erwärmung eines Vorformlings dar;
Figuren 5a und 5b zeigen jeweils eine schematische Aufsicht einer zweiten und einer dritten Ausführungsform einer Vorrichtung zum Erwärmen von Vorformlingen;
Figur 6 zeigt eine schematische Ansicht einer vierten Ausführungsform einer Vorrichtung zum Erwärmen von Vorformlingen;
Figur 7 zeigt eine spezielle Ausführung, bei der in Transportrichtung der Vorformlinge durch die Vorrichtung eine Steuerung der Strahler vorgesehen ist;
Figur 8 zeigt dass die Steuerung der einzelnen Strahler ebenfalls entlang der Länge des Vorformlings möglich ist;
Figur 9 zeigt eine schematische Aufsicht einer fünften Ausführungsform einer Vorrichtung zum Erwärmen von Vorformlingen 20 und
Figuren 10 bis 12 zeigen schematische Ansichten der Anordnung eines Reflektorsystems in Bezug auf die Strahler.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

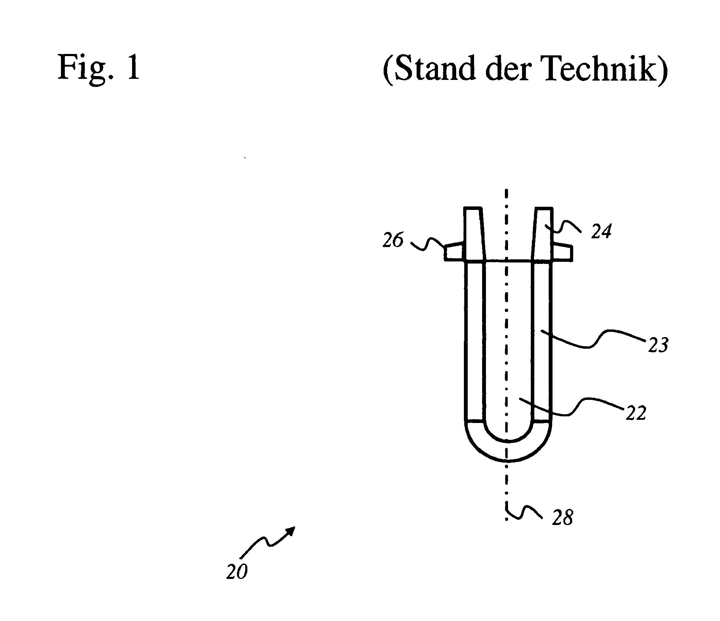

**Figur 1** zeigt eine schematische Ansicht eines aus dem Stand der Technik bekannten Vorformlings 20. Dieser besteht aus einem Korpus 22 umgeben von Wandungen 23. Weiterhin weist der Vorformling 20 in seinem oberen Bereich einen oben offenen Halsabschnitt 24 auf, der vom unteren Teil des Korpus 22 durch einen Tragring 26 abgegrenzt ist. Der Tragring 26 dient insbesondere der Halterung des Vorformlings 20 in den unterschiedlichen Verarbeitungsmaschinen, beispielsweise in der Streckblasmaschine. Weiterhin ist in Figur 1 die Längsachse 28 des Vorformlings 20 dargestellt.

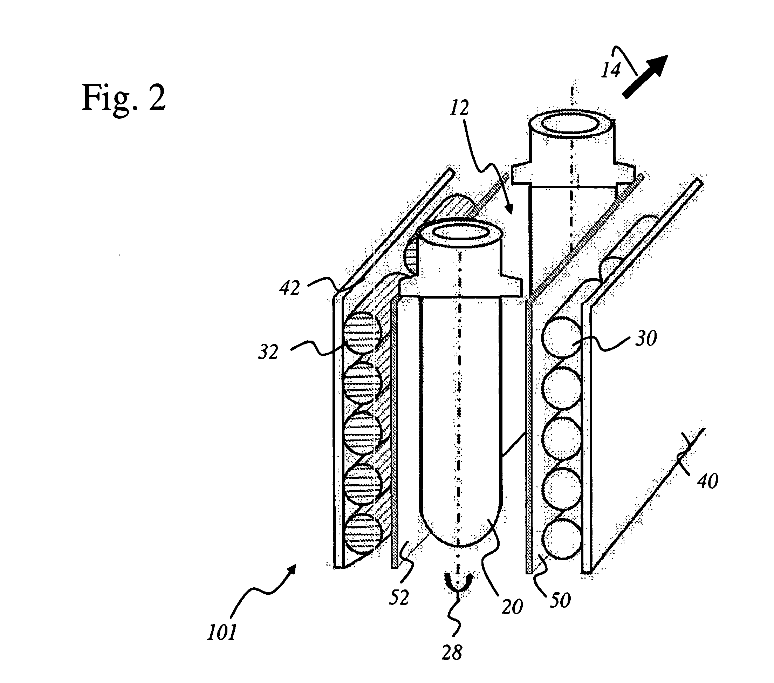

**Figur 2** zeigt eine schematische Ansicht einer ersten Ausführungsform einer Vorrichtung 101 zum Erwärmen von Vorformlingen 20. Der Vorformling 20 wird entlang einer Erwärmungsgasse 12 in Bewegungsrichtung 14 geführt. Dabei wird der Vorformling 20 vorzugsweise um seine Längsachse 28 rotiert, um eine möglichst gleichmäßige Erwärmung zu gewährleisten.

Entlang der Erwärmungsgasse 12 sind erste Strahler 30 und zweite Strahler 32 angeordnet. Die ersten Strahler 30 und die zweiten Strahler 32 unterscheiden sich dahingehend, dass sie elektromagnetische Strahlung (90) in einem ersten Wellenlängenbereich und einem zweiten Wellenlängenbereich emittieren. Die beiden Wellenlängenbereiche besitzen unterschiedliche Emissionsmaxima. Gemäß der hier beschriebenen Ausführungsform sind die ersten Strahler 30 der einen Seite der Erwärmungsgasse 12 angeordnet, während die zweiten Strahler 32 dazu gegenüberliegend auf der anderen Seite der Erwärmungsgasse 12 angeordnet sind. In der Erwärmungsgasse 12 sind erste und zweite Strahler 30, 32 sowohl parallel als auch senkrecht zur Längsachse 28 des Vorformlings 20 angeordnet.

Bei den ersten Strahlern 30 handelt es sich beispielsweise um Heizstrahler, deren Emissionsmaximum im kurzwelligen Infrarot-Bereich zwischen 780 nm bis 1400 nm liegt. Das Emissionsmaximum liegt bei ca. 1100 nm. Bei den zweiten Strahlern 32 handelt es sich dagegen um Heizstrahler, deren Emissionsmaximum im langwelligen Infrarot-Bereich zwischen 1400 nm und 3000 nm liegt. Das Emissionsmaximum liegt hier bei ca. 1900 nm.

Hinter den ersten und zweiten Strahlern 30, 32 ist jeweils eine IR reflektierende Schicht 40, 42 angebracht, die die Wellenlänge der Strahlung der jeweils gegenüberliegenden Strahler 30, 32 reflektiert und somit die Effizienz der Energieverwertung erhöht.

Zwischen dem Vorformling 20 und den ersten und zweiten Strahlern 30, 32 kann optional jeweils ein Filter 50, 52 angeordnet werden, der dazu dient, bestimmte Wellenlängen bzw. Wellenlängenbereiche aus dem Strahlungsspektrum der verwendeten Strahler 30, 32 herauszufiltern. Die Filter 50, 52 können in Form einer Quarzscheibe ausgebildet sein. Insbesondere wenn die Strahler 30, 32 ein ganzes Strahlungsspektrum emittieren, zum Aufwärmen der Vorformlinge 20 aber nur Strahlung einer ganz bestimmten Wellenlänge verwendet werden soll.

Der Vorformling 20 bewegt sich entlang der Bewegungsrichtung 14 durch die durch den ersten und zweiten Strahler 30, 32 gebildete Erwärmungsgasse 12. Aufgrund der Rotation des Vorformlings 20 um seine Längsachse 28 wird gewährleistet, dass dieser gleichmäßig von den ersten und zweiten Strahlern 30, 32 angestrahlt bzw. erwärmt wird.

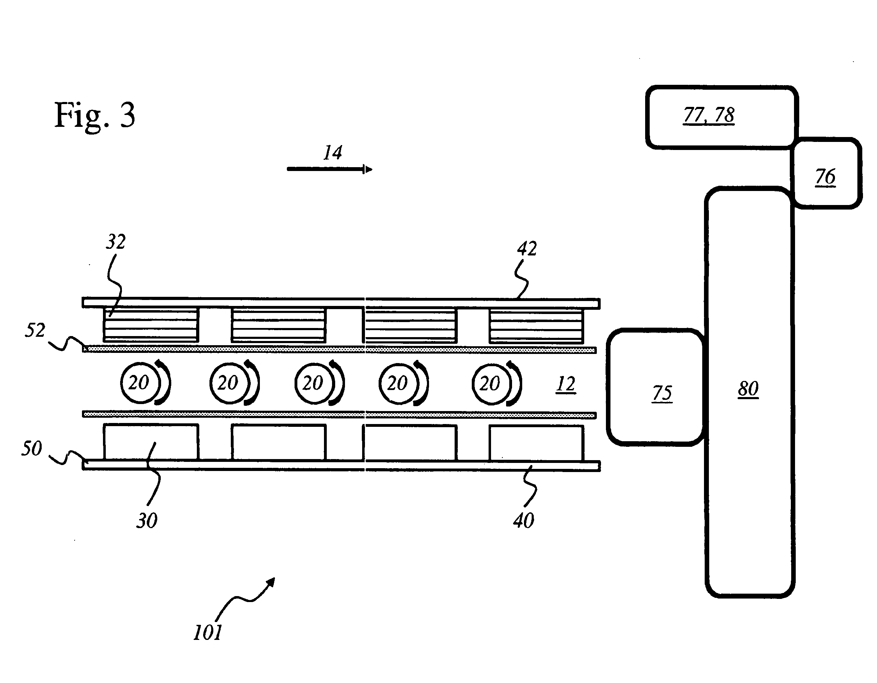

**Figur 3** zeigt eine schematische Draufsicht der ersten Ausführungsform der Vorrichtung 101 aus Figur 2. In dieser Figur ist dargestellt, dass mehrere Vorformlinge 20 gleichzeitig die Erwärmungsgasse 12 in Bewegungsrichtung 14 durchlaufen und anschließend mittels einer Übergabeeinheit 75 der weiterverarbeitenden Einheit, beispielsweise einer Blasformmaschine 80, zugeführt werden. Bei der Übergabeeinheit 75 kann es sich beispielsweise um einen Übergabestern handeln, der die Vorformlinge 20 in ihrem Halsbereich greift, weiter befördert und an die Blasformmaschine 80 übergibt. Zur Vereinfachung wird in den weiteren Figuren jeweils nur ein Vorformling 20 innerhalb der Erwärmungsgasse 12 dargestellt. Insbesondere werden die erwärmten Vorformlinge von nicht dargestellten Greifklammern, die an teleskopartig ausfahrbaren, an dem Übergabestern angebrachten, Übergabearmen angeordnet sind, ergriffen und an eine ebenfalls rotierende Blasformmaschine 80 mit mehreren, am Außenumfang des Rotors angeordneten Blasstationen, übergeben. Danach werden die fertiggeblasenen Artikel von einer Entnahmeeinheit 76 abtransportiert und insbesondere an eine Füllmaschine 77 und/oder eine Etikettiermaschine 78 zur Abfüllung von beispielsweise Getränken beziehungsweise zur Etikettierung übergeben.

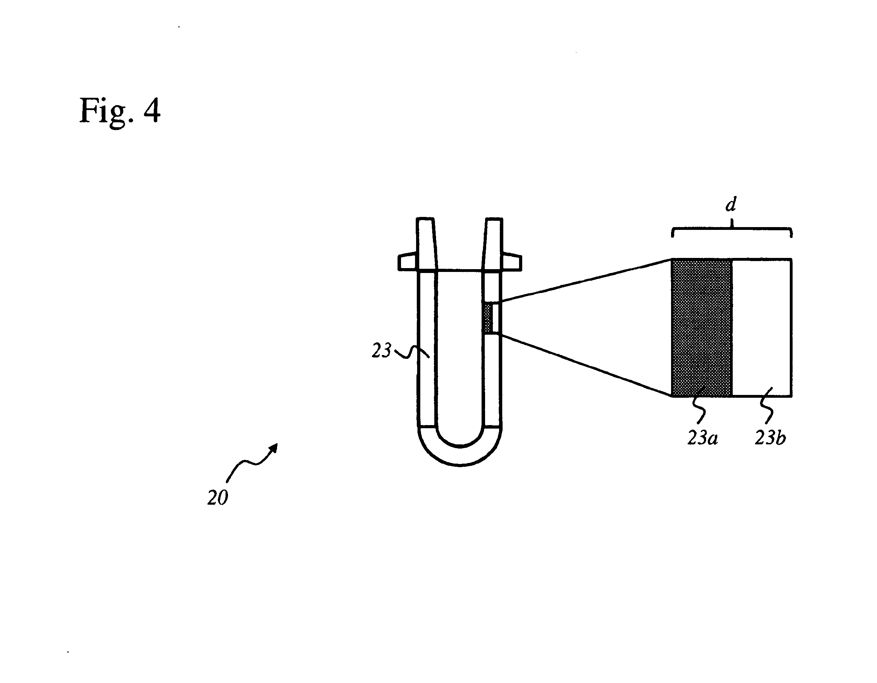

**Figur 4** stellt die Erwärmung eines Vorformlings 20 dar. Die Wandung 23 des Vorformlings 20 umfasst eine gewisse Dicke d, die von der Art des verwendeten Vorformlings 20 abhängt und beispielsweise bei unterschiedlichen Produktionschargen verschieden ausfallen kann. Die Strahlung des ersten Strahlers 30, kurzwelliges Infrarot, dringt eher tief in das Material des Vorformlings 20 ein und erwärmt somit vorzugsweise den inneren Bereich 23a der Wandung 23 des Vorformlings 20. Die Strahlung des zweiten Strahlers 32, langwelliges Infrarot, dringt dagegen eher oberflächlich in das Material ein und erwärmt somit vorzugsweise den äußeren Bereich 23b der Wandung 23 des Vorformlings 20.

Im gezeigten Ausführungsbeispiel ist dargestellt, dass der innere Bereich 23a und der äußere Bereich 23b der Wandung 23 jeweils ca. 50% der Wanddicke d ausmachen. Dies soll nur eine Möglichkeit verdeutlichen. Ebenso ist beispielsweise denkbar, dass 80% der Wanddicke d im inneren Bereich 23a durch die kurzwellige Strahlung des Strahlers 30 erwärmt werden, während die restlichen 20% der Wanddicke d im äußeren Bereich 23b durch die langwellige Strahlung des Strahlers 32 erwärmt werden.

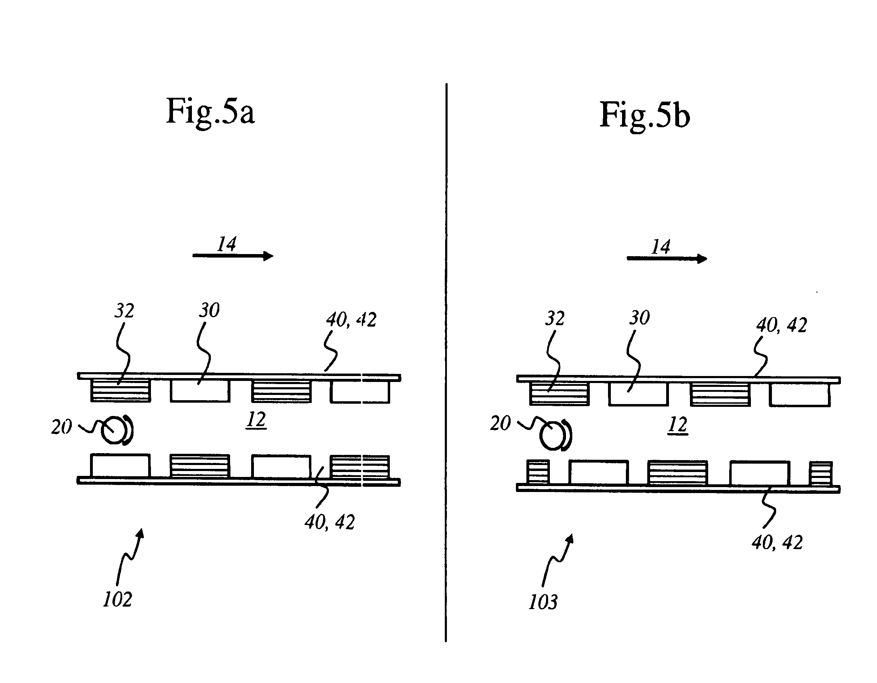

**Figuren 5a und 5b** zeigen jeweils eine schematische Draufsicht einer zweiten und einer dritten Ausführungsform einer Vorrichtung 102, 103 zum Erwärmen von Vorformlingen 20. Hierbei werden die ersten Strahler 30 und die zweiten Strahler 32 auf jeweils einer Seite der Erwärmungsgasse 12 gemischt angeordnet. Gemäß der in Figur 5a gezeigten Ausführungsform sind die ersten und zweiten Strahler 30, 32 dabei so angeordnet, dass sich die ersten und zweiten Strahler 30, 32 direkt gegenüberliegen. Bei der in Figur 5b gezeigten Ausführungsform sind die gegenüberliegenden ersten und zweiten Strahler 30, 32 zudem versetzt gegeneinander angeordnet.

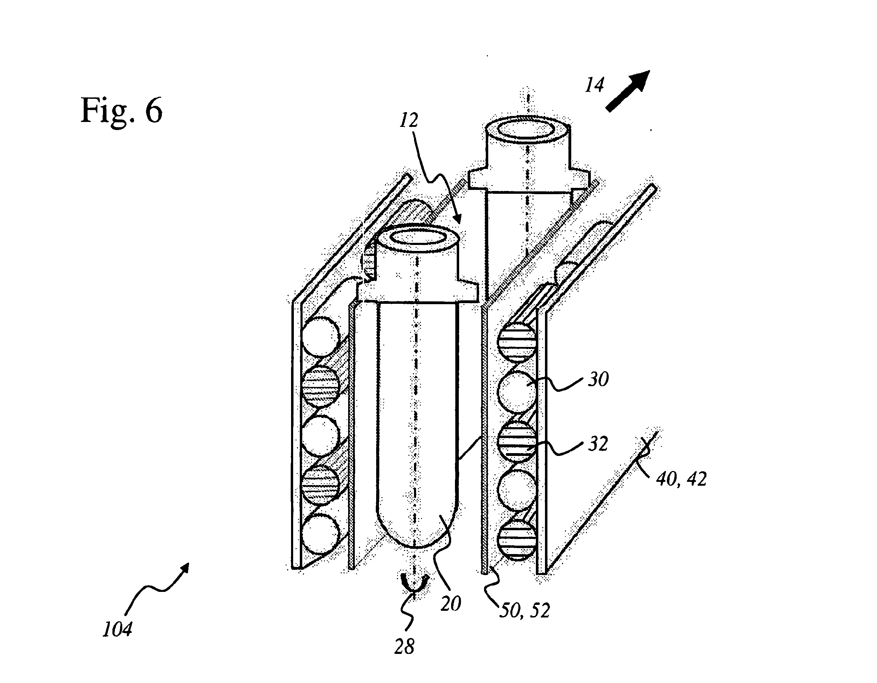

**Figur 6** zeigt eine schematische Darstellung einer vierten Ausführungsform einer Vorrichtung 104. Hierbei werden die ersten Strahler 30 und die zweiten Strahler 32 auf jeweils einer Seite der Erwärmungsgasse 12 sowohl entlang der Bewegungsrichtung 14 der Vorformlinge 20 als auch parallel zur Längsachse 28 der Vorformlinge 20 gemischt.

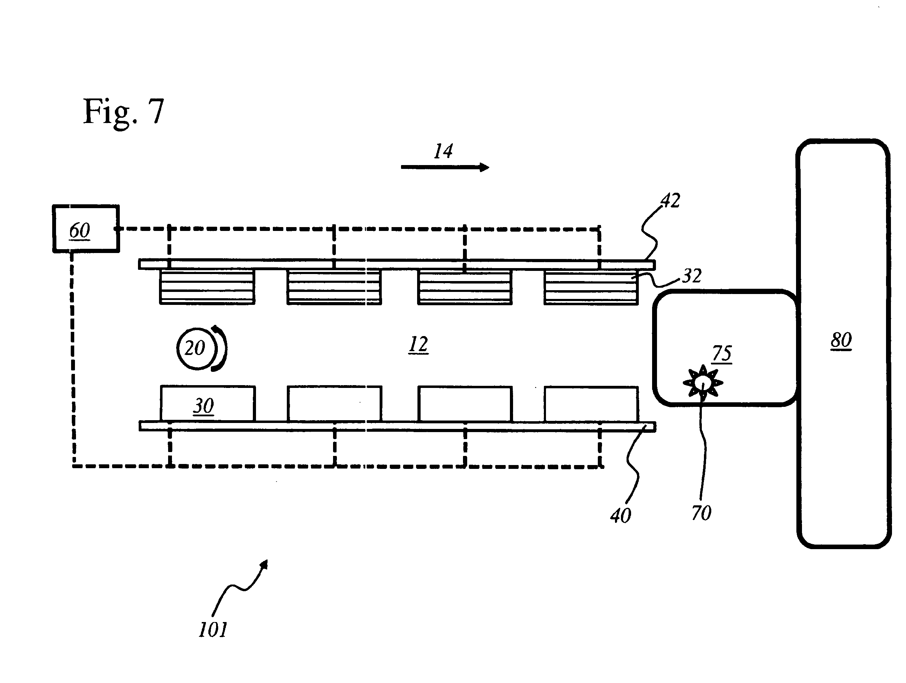

**Figur 7** zeigt jeweils eine spezielle Ausführung der ersten Ausführungsform einer Vorrichtung 101 zum Erwärmen von Vorformlingen 20 aus den Figuren 2 und 3. Gemäß dieser Ausführungsform der Vorrichtung 101 werden die ersten und die zweiten Strahler 30, 32 durch eine Steuereinrichtung 60 angesteuert und reguliert. Somit ist eine beliebige Einstellung der Leistung der einzelnen Strahler 30, 32 möglich.

Nachdem die Vorformlinge 20 die Erwärmungsgasse 12 verlassen haben durchlaufen sie eine Übergabeeinheit 75 und werden der weiterverarbeitenden Maschine, beispielsweise der Blasformmaschine 80, zugeführt. Im Bereich der Übergabeeinheit 75 wird die Temperatur des Vorformlings 20 mittels einer Temperaturmesseinrichtung 70 ermittelt. Bei der Temperaturmesseinrichtung 70 kann es sich beispielsweise um einen Temperaturfühler, ein Pyrometer, eine Wärmebildkamera oder eine vergleichbare Messeinrichtung handeln.

Die ermittelte Ist-Temperatur T_{IST} wird mit der Zieltemperatur T_{Z} verglichen, d.h. mit der Temperatur, die der Vorformling 20 am Ende der Erwärmungsgasse 12 bzw. vor Eintritt in die weiterverarbeitende Maschine 80 aufweisen soll, damit er problemlos weiter verarbeitet werden kann. Aus der gemessenen Ist-Temperatur T_{IST} (in °C) des Vorformlings 20 und der Zieltemperatur T_{Z} (in °C) wird die Temperaturdifferenz Δ T ermittelt: ΔT[°C]=T_{IST}[°C]- T_{Z}[°C]. Aufgrund dieser Temperaturdifferenz ΔT wird berechnet, ob und wie viel Energie zusätzlich nötig ist, um die Zieltemperatur T_{Z} zu erreichen. Diese Daten werden an die Steuereinheit 60 übermittelt, die entsprechend die Leistung der ersten und zweiten Strahler 30, 32 in der Erwärmungsgasse 12 reguliert.

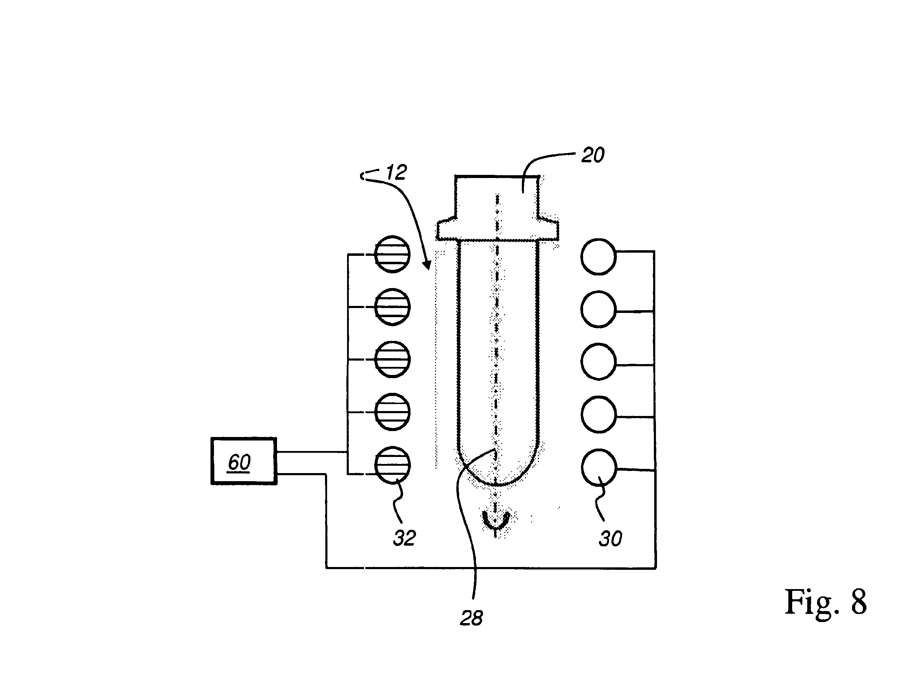

**Figur 8** zeigt, dass ebenso die Leistung der ersten und zweiten Strahler 30, 32 in Richtung der Längsachse 28 mittels der Steuereinheit 60 reguliert werden kann.

Hierdurch kann gezielt eine Verteilung der Erwärmung des Vorformlings 20 entlang der Längsachse 28 eingestellt werden.

Erfindungsgemäß werden die Leistungen der Strahler 30, 32 so eingestellt, dass der Vorformling 20 am Punkt der Temperaturmessung idealerweise die Zieltemperatur T_{Z} für die Weiterverarbeitung in der Blasformmaschine 80 erreicht hat, ohne diese zu übersteigen.

Die Steuerung erlaubt es auch abhängig von dem verarbeiteten Vorformling 20 die Erwärmungsgasse 12 auch nur mit einem Strahlertyp 30 (oder 32) zu betreiben und den anderen Strahlertyp 32 (oder 30) komplett auszuschalten. Beispielsweise können sehr dünnwandige Vorformlinge 20 nur mit den langwelligen Strahlern 32 des Typs II betrieben werden, während bei dickwandigen Vorformlingen 20 vermehrt kurzwellige Strahler 30 des Typs I verwendet werden.

Somit werden die Vorformlinge 20 direkt am Anfang der Erwärmungsphase stark erwärmt, während beim Weitertransport in Bewegungsrichtung 14 durch die Rotation des Vorformlings 20 um seine Längsachse 28 gewährleistet wird, dass die Erwärmung des gesamten Vorformlings 20 gleichmäßig erfolgt. Durch Bestrahlen mit wiederum erhöhter 80%iger Leistung am Ende der Erwärmungsstrecke 12 wird gewährleistet, dass der Vorformling 20 die gewünschte Zieltemperatur T_{Z} erreicht. Dadurch, dass die in der Mitte der Erwärmungsgasse 12 angeordneten Strahler 30, 32 mit einer geringeren Leistung betrieben werden können, kann Energie eingespart werden.

Dem Fachmann ist klar, dass bei dieser Ausführungsform auch andere Anordnungen der Strahler 30, 32 beispielsweise gemäß den Ausführungsformen 102,103 oder 104 (Figuren 5a, 5b oder 6) möglich sind. Weiterhin sollen auch alle anderen denkbaren Konfigurationen bezüglich der eingestellten Leistungen der Strahler 30, 32 umfasst sein.

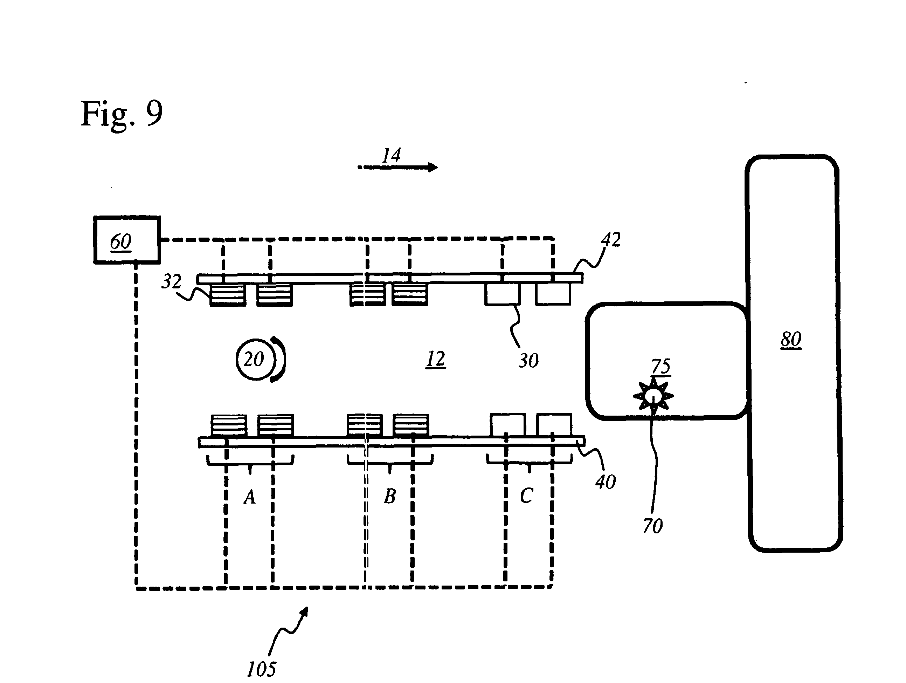

**Figur 9** zeigt eine schematische Aufsicht einer fünften Ausführungsform einer Vorrichtung 105 zum Erwärmen von Vorformlingen 20. Bei dieser ist im vorderen Bereich der Erwärmungsgasse 12 eine Vorwärmstrecke A angeordnet, die zweite Strahler 32 mit langwelliger Infrarot-Strahlung umfasst. Anschließend durchlaufen die Vorformlinge 20 eine Ausgleichsstrecke B, bei der die durch die zweiten Strahler aufgebrachte Energie einsinken kann. Hierbei finden vorzugsweise ebenfalls die zweiten Strahler 32 Verwendung, die gegebenenfalls nur mit einem Teil der möglichen Leistung betrieben werden. In der daran anschließenden Endstrecke C werden die Vorformlinge 20 mit Hilfe von kurzwelliger Strahlung durch die ersten Strahler 30 auf Zieltemperatur T_{Z} gebracht. Wie in Figur 7 kann auch bei dieser Ausführungsform der Vorrichtung 105 in der Übergabeeinheit 75 vor Verarbeitung der Vorformlinge 20 in der Blasformmaschine 80 eine Temperaturmesseinrichtung 70 und eine Steuereinheit 60 vorgesehen sein, um die Temperatur der Vorformlinge 20 optimal zu überwachen und die Strahler 30, 32 entsprechend in ihrer Leistung zu regulieren.

Mit den vorbeschriebenen Ausführungsformen der Vorrichtung 101, 102, 103, 104 und 105 zum Vorheizen von Vorformlingen 20 kann die zum optimalen Vorheizen der Vorformlinge 20 für sämtliche denkbare Material- und / oder Wandstärkenkombinationen nötige Energieleistung gezielt bereitgestellt werden, wobei gleichzeitig verhindert wird, dass die Vorformlinge 20 zu stark erhitzt werden. Ein zu starkes Erhitzen würde zum Einen zu ungewünschten Deformationen der Vorformlinge 20 und somit zu Ausschuss führen und zum Anderen müssten - um dem entgegen zu wirken - die Vorformlinge 20 mittels einer Oberflächenkühlung wiederum abgekühlt werden. Eine Oberflächenkühlung wirkt sich wiederum negativ auf die Energiebilanz aus, da Energie nötig ist, um die den Vorformlingen 20 zu viel zugeführte Energie wiederum abzuführen. Weiterhin stellt die Oberflächenkühlung einen zusätzlichen Bestandteil der Gesamtvorrichtung dar, der wiederum einer selbständigen Wartung bedarf und störungsanfällig ist. Der Vorteil der vorbeschriebenen Ausführungsformen der Vorrichtung 101, 102, 103, 104 und 105 zum Vorheizen von Vorformlingen 20 besteht also insbesondere darin, dass auf eine Oberflächenkühlung der Vorformlinge 20 verzichtet werden kann.

Ein weiterer Vorteil aufgrund der individuell einstellbaren Steuerung besteht darin, dass der Anwender nicht auf bestimmte Materialien bzw. Eigenschaften der Vorformlinge 20 festgelegt ist, sondern die Einstellungen der Strahler 30, 32 in Abhängigkeit von den verwendeten Vorformlingen 20 immer wieder entsprechend anpassen kann. Die Einstellung der Leistungen der Strahler 30, 32 wird aufgrund von Testläufen ermittelt, indem jeweils die Temperatur von Probe-Vorformlingen 20 nach Durchlaufen der Erwärmungsgasse gemessen wird und dann in Verbindung mit Erfahrungswerten die Leistung entsprechend eingestellt und auf den verwendeten Typ von Vorformlingen 20 angepasst wird.

Ein entsprechendes Heizmodul kann kürzer gebaut werden, da weniger Strahler 30, 32 als im Stand der Technik benötigt werden. Zudem kann, wie bereits beschrieben, die aufwendige Lüftungstechnik der Oberflächenkühlung entfallen.

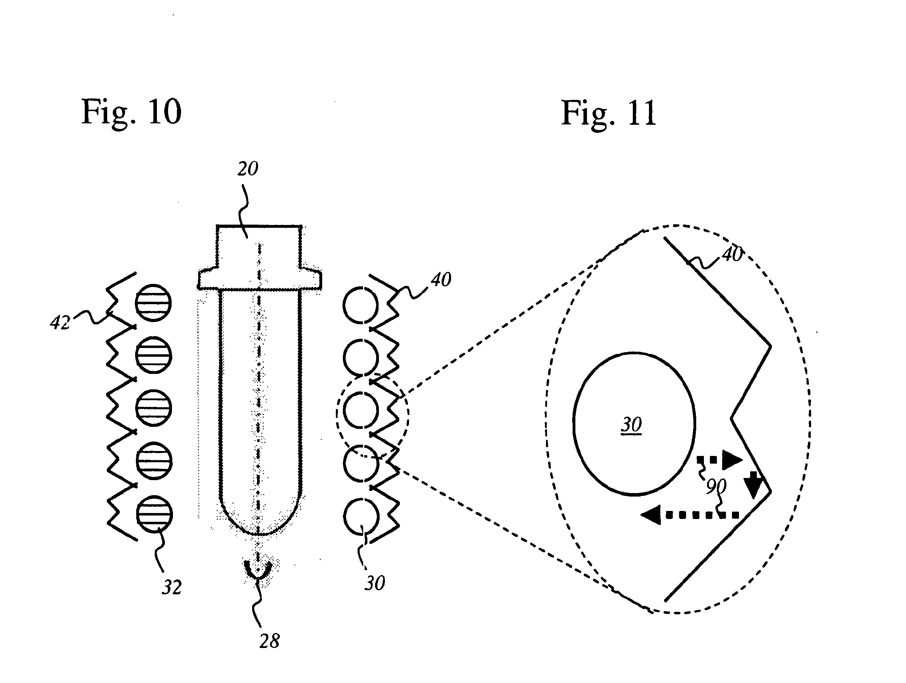

**Figuren 10 bis 12** zeigen eine schematische Ansicht der reflektierenden Schicht 40, 42 und ihrer reflektierenden Eigenschaften. Dabei handelt es sich um eine Schicht 40, 42 mit einer strukturierten Oberfläche. Insbesondere weist die Schicht 40, 42 hinter den jeweiligen ersten und zweiten Strahlern 30, 32 einen speziell geformten Reflektor auf. Dieser dient, wie ein Figur 11 dargestellt, unter anderem dazu, die Strahlung 90 des direkt davor angeordneten Strahlers 30, 32 optimal zu reflektieren, wobei ein Totpunkt vermieden wird und somit die Effektivität erhöht wird.

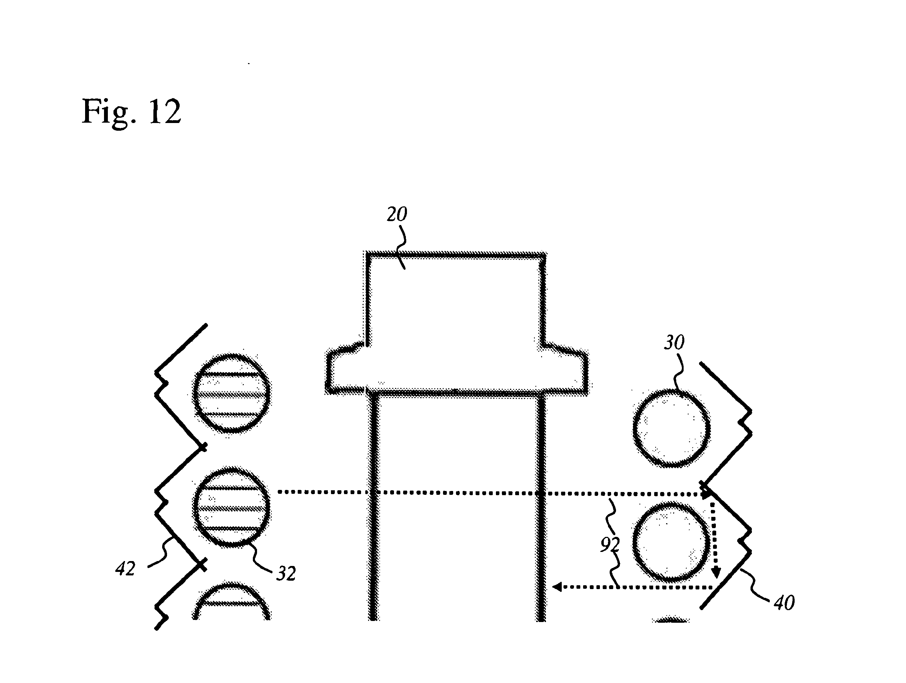

Wie in Figur 12 dargestellt, kann die Schicht 40, 42 weiterhin dazu dienen, die Rest-Strahlung 92 des jeweils gegenüberliegend angeordneten Strahlers 30, 32 zurück zum Vorformling 20 zu reflektieren.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

Insbesondere können die in Figur 2 dargestellten Filterscheiben 50, 52 auch bei allen anderen Ausführungsformen der Vorrichtung 102, 103, 104, 105 eingesetzt werden.

### Bezugszeichenliste:

- 101: Vorrichtung zum Vorheizen von Vorformlingen
- 102: Vorrichtung zum Vorheizen von Vorformlingen
- 103: Vorrichtung zum Vorheizen von Vorformlingen
- 104: Vorrichtung zum Vorheizen von Vorformlingen
- 105: Vorrichtung zum Vorheizen von Vorformlingen
- 106: Vorrichtung zum Vorheizen von Vorformlingen
- 12: Erwärmungsgasse
- 14: Bewegungsrichtung
- 20: Vorformling
- 22: Korpus
- 23: Wandung
- 23a: innerer Bereich der Wandung
- 23b: äußerer Bereich der Wandung
- 24: Halsabschnitt
- 26: Tragring
- 28: Längsachse
- 30: Strahler vom Typ I
- 32: Strahler vom Typ II
- 40: Reflektierende Schicht
- 42: Reflektierende Schicht
- 50: Filterscheibe
- 52: Filterscheibe
- 60: Steuereinheit
- 70: Temperaturmessvorrichtung
- 75: Übergabeeinheit
- 76: Entnahmeeinheit
- 77: Füllmaschine
- 78: Etikettiermaschine
- 80: Blasformmaschine
- 90: elektromagnetische Strahlung
- 92: elektromagnetische Rest-Strahlung
- A: Vorwärmstrecke
- B: Ausgleichsstrecke
- C: Endstrecke
- d: Dicke der Wandung
- ΔT: Temperaturdifferenz
- T_{IST}: Ist-Temperatur
- T_{Z}: Zieltemperatur

## Patentansprüche

1. Vorrichtung (101, 102, 103, 104, 105) zum Erwärmen von Vorformlingen (20), mit einer Erwärmungsgasse (12), durch die die Vorformlinge (20) um ihre Längsachse (28) rotierend transportierbar sind die mindestens einen ersten Strahler (30) aufweist, der elektromagnetische Strahlung (90) in einem ersten Wellenlängenbereich emittieren kann, der ein erstes Emissionsmaximum besitzt, wobei die Vorrichtung mindestens einen zweiten Strahler (32) aufweist, der elektromagnetische Strahlung (90) in einem zweiten Wellenlängenbereich emittieren kann und ein zweites Emissionsmaximum besitzt, wobei sich der zweite Wellenlängenbereich und das zweite Emissionsmaximum von denen des mindestens einen ersten Strahlers (30) unterscheidet, wobei der mindestens eine erste Strahler (30) und der mindestens eine zweite Strahler (32) in Bezug auf die Erwärmungsgasse (12) einander gegenüberliegend angeordnet sind **dadurch gekennzeichnet, dass** der mindestens eine erste Strahler (30) eine elektromagnetische Strahlung (90) in einem ersten IR-Wellenlängenbereich emittieren kann und dass der zweite Strahler (32) eine elektromagnetische Strahlung (90) in einem zweiten IR-Wellenlängenbereich emittieren kann.

2. Vorrichtung (101, 102, 103, 104, 105) nach Anspruch 1, wobei der mindestens eine erste Strahler (30) eine elektromagnetische Strahlung (90) in einem Wellenlängenbereich zwischen 0,78 µm bis 1,4 µm emittiert und wobei der zweite Strahler (32) eine elektromagnetische Strahlung (90) in einem Wellenlängenbereich zwischen 1,4 µm bis 3,0 µm emittiert.

3. Vorrichtung (101, 102, 103, 104, 105) nach Anspruch 1, wobei der erste Strahler (30) ein Emissionsmaximum bei einer Wellenlänge von ca. 1,1 µm und wobei der zweite Strahler (32) ein Emissionsmaximum bei einer Wellenlänge von ca. 1,9 µm besitzt.

4. Vorrichtung (101, 102, 103, 104, 105) nach einem der Ansprüche 1 bis 3, wobei wenigstens zwei erste Strahler (30) in einer ersten Reihe angeordnet sind und wobei wenigstens zwei zweite Strahler (32) in einer zweiten Reihe angeordnet sind, wobei die erste Reihe der zweiten Reihe gegenüberliegend angeordnet ist.

5. Vorrichtung (101, 102, 103, 104, 105) nach einem der Ansprüche 1 bis 3, wobei wenigstens ein erster Strahler (30) und wenigstens ein zweiter Strahler (32) in einer ersten Reihe angeordnet sind und wobei wenigstens ein erster Strahler (30) und wenigstens ein zweiter Strahler (32) in einer zweiten Reihe angeordnet sind, wobei die erste Reihe und die zweite Reihe einander gegenüberliegend angeordnet sind.

6. Vorrichtung (101, 102, 103, 104, 105) nach einem der Ansprüche 1 bis 5, wobei auf der dem Vorformling abgewandten Seite des ersten Strahlers (30) und/oder des zweiten Strahlers (32) jeweils eine reflektierende Schicht (40, 42) vorgesehen ist.

7. Vorrichtung (101, 102, 103, 104, 105) nach Anspruch 6, wobei die reflektierende Schicht (40, 42) ein W-förmiges Profil aufweist.

8. Vorrichtung (101, 102, 103, 104, 105) nach einem der Ansprüche 1 bis 7, wobei zwischen den sich durch die Vorrichtung (101, 102, 103, 104, 105) bewegten Vorformlingen (20) und den ersten und zweiten Strahlern (30, 32) jeweils ein Filter (50, 52) angeordnet ist.

9. Vorrichtung (101, 102, 103, 104, 105) nach einem der Ansprüche 1 bis 8, wobei die ersten und zweiten Strahler (30, 32) jeweils mit einer Steuereinheit (60) verbunden sind, wobei die Intensität der Strahler (30, 32) durch die Steuereinheit (60) einzeln einstellbar ist.

10. Vorrichtung (101, 102, 103, 104, 105) nach einem der Ansprüche 1 bis 9, wobei der Vorrichtung (101, 102, 103, 104, 105) eine Temperaturmesseinheit (70), insbesondere ein Pyrometer zugeordnet ist.

11. Vorrichtung (101, 102, 103, 104, 105) nach Anspruch 10, wobei die Temperaturmesseinheit (70) und die Steuereinheit (60) gekoppelt sind.

12. Verfahren zur Erwärmung von Vorformlingen (20) mit folgenden Schritten:
• die Vorformlinge (20) werden durch eine Erwärmungsgasse (12) und um ihre Längsachse (28) rotierend hindurch bewegt, wobei auf beiden Seiten der Erwärmungsgasse (12) mindestens ein erster Strahler (30) und ein zweiter Strahler (32) einander gegenüberliegend angeordnet sind;
• Bestrahlen der Vorformlinge (20) mit elektromagnetischer Strahlung (90), die vom ersten Strahler (30) abgegeben wird, in einem ersten IR-Wellenlängenbereich,
**gekennzeichnet durch**
• zeitgleiches Bestrahlen der Vorformlinge (20) mit elektromagnetischer Strahlung (90), die vom zweiten Strahler (32) abgegeben wird, in einem zweiten IR- Wellenlängenbereich, wobei sich der erste IR-Wellenlängenbereich von dem zweiten IR-Wellenlängenbereich unterscheidet.

13. Verfahren nach Anspruch 12, wobei die Temperatur des Vorformlings (20) in einem Übergabebereich (75) ermittelt wird und die Leistung von mindestens einem innerhalb der Erwärmungsgasse (12) angeordneten ersten und zweiten Strahler (30, 32) derart reguliert wird, dass eine erforderliche Solltemperatur der Vorformlinge (20) erzielt wird.

## Claims

1. Device (101, 102, 103, 104, 105) for heating preforms (20), with a heating alley (12), through which the preforms (20) are transported while rotating about their longitudinal axis (28), the heating alley (12) comprising at least one emitter (30), emitting electromagnetic radiation (90) in a first wavelength range with a first emission maximum, whereby the device comprises at least one second emitter (32) emitting electromagnetic radiation (90) in a second wavelength range with a second emission maximum, whereby the second wavelength range and the second emission maximum are different from the first wavelength range and the first emission maximum of the at least one first emitter (30), whereby the at least one first emitter (30) and the at least one second emitter (32) are arranged opposite each other in relation to the heating alley (12) **characterized in that** the at least one first emitter (30) can emit an electromagnetic radiation (90) in a first IR- wavelength range and that the second emitter (32) can emit an electromagnetic radiation (90) in a second IR- wavelength range.

2. Device (101, 102, 103, 104, 105) according to claim 1, whereby the at least one first emitter (30) emits an electromagnetic radiation (90) in a wavelength range between 0,78 µm and 1,4 µm and whereby the second emitter (32) emits an electromagnetic radiation (90) in a wavelength range between 1,4 µm and 3,0 µm.

3. Device (101, 102, 103, 104, 105) according to claim 1, whereby the at least one first emitter (30) has a emission maximum at a wavelength of about 1,1 µm and whereby the second emitter (32) has a emission maximum at a wavelength of about 1,9 µm.

4. Device (101, 102, 103, 104, 105) according to one of the claims 1 to 3, whereby at least two first emitters (30) are arranged in a first row and whereby at least two second emitters (32) are arranged in a second row, wherein the first row is arranged opposite to the second row.

5. Device (101, 102, 103, 104, 105) according to one of the claims 1 to 3, whereby at least one first emitter (30) and at least one second emitter (32) are arranged in a first row and whereby at least one first emitter (30) and at least one second emitter (32) are arranged in a second row, wherein the first row is arranged opposite to the second row.

6. Device (101, 102, 103, 104, 105)) according to one of the claims 1 to 5, whereby a reflecting layer (40, 42) is provided each on the side of the first emitter (30) facing away from the preform and/or on the side of the second emitter (32) facing away from the preform.

7. Device (101, 102, 103, 104, 105) according to claim 6, wherein the reflecting layer (40, 42) has a W-shaped profile.

8. Device (101, 102, 103, 104, 105) according to one of the claims 1 to 7, wherein a filter (50, 52) is arranged between the preforms (20) moving through the device (101, 102, 103, 104, 105) and each of the first and second emitters.

9. Device (101, 102, 103, 104, 105) according to one of the claims 1 to 8, wherein the first and second emitters (30, 32) are each coupled to a control unit (60), whereby the intensity of the emitters (30, 32) is individually adjustable by the control unit (60).

10. Device (101, 102, 103, 104, 105) according to one of the claims 1 to 9, wherein a temperature measuring unit (70) is associated with the device (101, 102, 103, 104, 105), especially wherein a pyrometer is associated with the device (101, 102, 103, 104, 105).

11. Device (101, 102, 103, 104, 105) according to claim 10, wherein the temperature measuring unit (70) is coupled to the control unit (60).

12. Method for heating preforms (20), comprising the following steps:
• transporting the preforms (20) through the heating alley (12) thereby rotating them about their longitudinal axis (28), whereby on both sides if the heating alley (12) at least one first emitter (30) and a second emitter (32) are arranged opposite to each other;
• irradiating the preforms (20) with electromagnetic radiation (90) of a first IR-wavelength range emitted by the first emitter (30) and
**characterized**
• **by** simultaneously irradiating the preforms (20) with electromagnetic radiation (90) of a second IR- wavelength range emitted by the second emitter (32), whereby the first IR- wavelength range differs from the second IR- wavelength range.

13. Method according to claim 12, whereby the temperature of the preform (20) is determined in a transfer region (75) and whereby the power of at least one first and second emitter (30, 32) arranged within the heating alley is regulated in such a way that a required set temperature of the preforms (20) is achieved.

## Revendications

1. Dispositif (101, 102, 103, 104, 105) de chauffage de préformes (20), comprenant une voie de chauffage (12) à travers laquelle lesdites préformes (20), tout en tournant autour de leur axe longitudinal (28), peuvent être transportées et qui présente au moins un premier radiateur (30) apte à émettre un rayonnement électromagnétique (90) dans une première gamme de longueurs d'onde possédant un premier maximum d'émission, ledit dispositif présentant au moins un deuxième radiateur (32) qui est apte à émettre un rayonnement électromagnétique (90) dans une deuxième gamme de longueurs d'onde et possède un deuxième maximum d'émission, ladite deuxième gamme de longueurs d'onde et ledit deuxième maximum d'émission se distinguant de ceux dudit au moins un premier radiateur (30), ledit au moins un premier radiateur (30) et ledit au moins un deuxième radiateur (32) étant disposés en vis-à-vis l'un de l'autre par rapport à ladite voie de chauffage (12), **caractérisé par le fait que** ledit au moins un premier radiateur (30) peut émettre un rayonnement électromagnétique (90) dans une première gamme de longueurs d'onde infrarouge et que ledit deuxième radiateur (32) peut émettre un rayonnement électromagnétique (90) dans une deuxième gamme de longueurs d'onde infrarouge.

2. Dispositif (101, 102, 103, 104, 105) selon la revendication 1, dans lequel ledit au moins un premier radiateur (30) émet un rayonnement électromagnétique (90) dans une gamme de longueurs d'onde comprise entre 0,78 µm et 1,4 µm et dans lequel ledit deuxième radiateur (32) émet un rayonnement électromagnétique (90) dans une gamme de longueurs d'onde comprise entre 1,4 µm et 3,0 µm.

3. Dispositif (101, 102, 103, 104, 105) selon la revendication 1, dans lequel ledit premier radiateur (30) présente un maximum d'émission à une longueur d'onde de 1,1 µm à peu près et dans lequel ledit deuxième radiateur (32) présente un maximum d'émission à une longueur d'onde de 1,9 µm environ.

4. Dispositif (101, 102, 103, 104, 105) selon l'une quelconque des revendications 1 à 3, dans lequel au moins deux premiers radiateurs (30) sont disposés en une première rangée et dans lequel au moins deux deuxièmes radiateurs (32) sont disposés en une deuxième rangée, ladite première rangée étant disposée en vis-à-vis de ladite deuxième rangée.

5. Dispositif (101, 102, 103, 104, 105) selon l'une quelconque des revendications 1 à 3, dans lequel au moins un premier radiateur (30) et au moins un deuxième radiateur (32) sont disposés en une première rangée et dans lequel au moins un premier radiateur (30) et au moins un deuxième radiateur (32) sont disposés en une deuxième rangée, lesdites première et deuxième rangées étant disposées en vis-à-vis l'une de l'autre.

6. Dispositif (101, 102, 103, 104, 105) selon l'une quelconque des revendications 1 à 5, dans lequel une couche réfléchissante (40, 42) est prévue respectivement sur la face du premier radiateur (30) et/ou du deuxième radiateur (32), qui montre dans la direction opposée à la préforme.

7. Dispositif (101, 102, 103, 104, 105) selon la revendication 6, dans lequel ladite couche réfléchissante (40, 42) présente un profil en W.

8. Dispositif (101, 102, 103, 104, 105) selon l'une quelconque des revendications 1 à 7, dans lequel un filtre (50, 52) est disposé respectivement entre les préformes (20) déplacés à travers le dispositif (101, 102, 103, 104, 105) et lesdits premiers et deuxièmes radiateurs (30, 32).

9. Dispositif (101, 102, 103, 104, 105) selon l'une quelconque des revendications 1 à 8, dans lequel lesdits premiers et deuxièmes radiateurs (30, 32) sont reliés chacun à une unité de commande (60), l'intensité des radiateurs (30, 32) pouvant être réglée individuellement par ladite unité de commande (60).

10. Dispositif (101, 102, 103, 104, 105) selon l'une quelconque des revendications 1 à 9, dans lequel une unité de mesure de température (70), en particulier un pyromètre, est associé(e) au dispositif (101, 102, 103, 104, 105).

11. Dispositif (101, 102, 103, 104, 105) selon la revendication 10, dans lequel ladite unité de mesure de température (70) et ladite unité de commande (60) sont couplées.

12. Procédé de chauffage de préformes (20), comprenant les étapes suivantes :
- les préformes (20) sont déplacées à travers une voie de chauffage (12) et de manière à tourner autour de leur axe longitudinal (28), au moins un premier radiateur (30) et un deuxième radiateur (32) étant disposés en vis-à-vis l'un de l'autre des deux côtés de ladite voie de chauffage (12),
- exposer lesdites préformes (20) à un rayonnement électromagnétique (90) qui est émis par ledit premier radiateur (30), dans une première gamme de longueurs d'onde infrarouge,
**caractérisé par**
- une exposition simultanée des préformes (20) à un rayonnement électromagnétique (90) qui est émis par ledit deuxième radiateur (32), dans une deuxième gamme de longueurs d'onde infrarouge, la première gamme de longueurs d'onde infrarouge se distinguant de la deuxième gamme de longueurs d'onde infrarouge.

13. Procédé selon la revendication 12, dans lequel la température de la préforme (20) est déterminée dans une zone de transfert (75) et la puissance d'au moins un premier et un deuxième radiateurs (30, 32) disposés à l'intérieur de la voie de chauffage (12) est réglée de telle manière qu'une température de consigne requise des préformes (20) est atteinte.
